# EUROPEAN PATENT SPECIFICATION

(11) **EP 1 855 490 B1**
(45) Date of publication and mention of the grant of the patent: **06.05.2009**
(21) Application number: 06741799.8
(22) Date of filing: 08.05.2006
(51) Int. Cl.: H04W 8/28

(54) **METHOD FOR REALIZING MOBILE NUMBER PORTABILITY BASED ON DATA SERVICE**
VERFAHREN ZUR REALISATION VON MOBILER NUMMERN-PORTABILITÄT BASIEREND AUF EINEM DATENSERVICE
PROCEDE DE REALISATION DE TRANSFERABILITE DE NUMERO DE TELEPHONE MOBILE BASE SUR UN SERVICE DE DONNEES

(30) Priority: 10.05.2005 CN 200510069055
(43) Date of publication of application: 14.11.2007
(73) Proprietor: Huawei Technologies Co., Ltd., Longgang District Shenzhen Guangdong 518129 (CN)
(72) Inventor: LI, Yimin, Huawei Administration Building, Guangdong 518129 (CN)
(74) Representative: Epping - Hermann - Fischer
(86) International application number: PCT/CN2006/000904
(87) International publication number: WO 2006/119696

(56) References cited:
- WO-A-20/04004382
- WO-A2-03/067855
- CN-A- 1 477 805
- KR-A- 2004 105 479
- "Digital cellular telecommunications system (Phase 2+); Universal Mobile Telecommunications System (UMTS); Support of GSM Mobile Number Portability (MNP); Stage 2 (3GPP TS 23.066 version 6.0.0 Release 6); ETSI TS 123 066" ETSI STANDARDS, LIS, vol. 3-CN2;3-CN4, no. V6.0.0, 1 December 2004 (2004-12-01), XP014027469 ISSN: 0000-0001
- ITU-T TELECOMMUNICATION STANDARDIZATION SECTOR OF ITU: "Structure of the Land Mobile Global Title for the signalling connection control pat (SCCP)" ITU-T E.214 (EXTRACT FROM THE BLUE BOOK), [Online] 1993, pages 1-4, XP002479102 Retrieved from the Internet: URL:itu.int> [retrieved on 2008-05-05]

## Description

### Field of the Invention

The present invention relates to the communication technical field, and more particularly to a method for implementing mobile number portability based on data services.

### Background of the Invention

Mobile Number Portability (MNP) is a technique that a mobile subscriber keeps his/her mobile subscriber number unchanged when the mobile subscriber changes a mobile operator which provides services to the mobile subscriber. The mobile subscriber number is Mobile Subscriber International Subscriber Dial Number (MSISDN) in GSM network, or Mobile Directory Number (MDN) in CDMA network. Without MNP service, a mobile subscriber has to change his/her mobile subscriber number accordingly when the mobile subscriber changes a mobile operator which provides services to the mobile subscriber, and the mobile subscriber has to inform the others of the new number; otherwise the communication with the others would be affected. When MNP service is available, the mobile subscriber may change the mobile operator conveniently to obtain better services without changing the mobile subscriber number. Correspondingly, in the data communication service field, when MNP is implemented, any data messages targeting to the mobile subscriber may be sent to the mobile subscriber's terminal correctly even after the mobile subscriber changes the mobile operator to get better services.

The MNP technique is achieved in a call process by completing route redirection to a Home Location Register (HLR) through a Signaling Transfer Point (STP) in a No.7 Signaling Network. The implementation process is as follows:
To access a called subscriber, a Mobile Switching Center (MSC) that provides services to a calling subscriber should find out an HLR (i.e., the HLR for the called subscriber) according to a mobile subscriber number of the called subscriber, obtain a serving MSC for the called subscriber from the HLR, and then perform call switching;

Because the mobile subscriber number corresponds to the address of the HLR, the No.7 signaling network may route a "location search message" to the HLR according to the mobile subscriber number. After MNP is implemented, the mobile subscriber number does not change when the subscriber changes the mobile operator, i.e., the mobile subscriber number still corresponds to the HLR. And location information related to the subscriber is stored in a new HLR for the subscriber after the mobile operator is changed. Thus, a "location search message" must be forwarded to the new HLR in order to ensure that the serving MSC for the mobile subscriber can be obtained correctly. In this case, a signal transfer point supporting MNP (MNP-STP) in the No.7 signaling network is able to obtain an address of a new HLR for the subscriber by searching an internal database or an external database according to the mobile subscriber number, replace a destination address in the "location search message" with the address of the new HLR, send the "location search message" to the new HLR , and obtain the serving MSC for the called subscriber from the new HLR.

Document WO 2004/004382 Al discloses a solution that, in the case that phone numbers do not permit an unambiguous linkage of a user to a specific telecommunication network, and several attempts at delivery of short messages are required, by storing preferably all or part of the parameters or data associated with the first attempt at delivery, particularly the target information, in the SMSC or the SMS-GMSC in order to be reused, at least in part, in subsequent attempts at delivery, routing in subsequent attempts at delivery is accelerated and unnecessary routing queries may be avoided.

Document TS23.066 V6.0.0, "Support of GSM Mobile Number Portability MNP" discloses several scenarios of SMS delivery with MNP support as defined by 3GPP.

Furthermore, the MNP technique in data services is also achieved by completing route redirection to a Home Location Register (HLR) through a Signaling Transfer Point (STP) in a No.7 Signaling Network. In other words, to send a data message to a receiving mobile subscriber, a short message center for a sending mobile subscriber should search for an HLR according to the mobile subscriber number of the receiving mobile subscriber, obtain the serving MSC for the receiving mobile subscriber from the HLR, and then perform data message forwarding. The implementation of the MNP technique in the redirecting process for the "data service route search message" is similar to the technique used in the redirecting process for the "location search message" in a calling process. In GSM network, the "data service route search message" is MAP-SRI-FOR-SM, and a normal response message for the MAP-SRI-FOR-SM may return a global access address of the serving MSC or SGSN for the mobile subscriber. In CDMA network, the "data service route search message" is SMSREQ, and a normal response message for the SMSREQ may return a global access address of the serving MSC for the mobile subscriber.

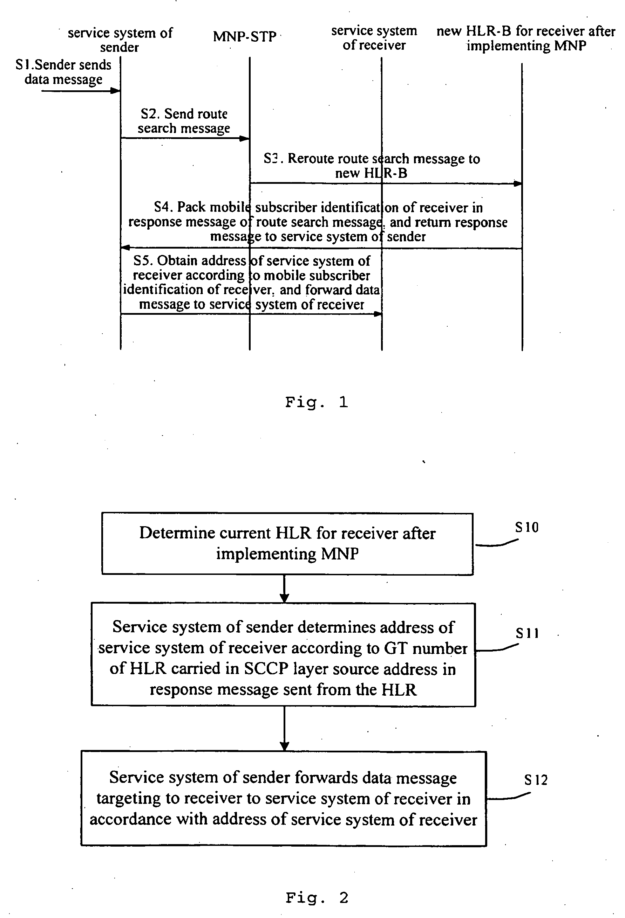

The implementation process of the MNP technique based on data services in prior art will be described below. Figure 1 shows a schematic diagram of the implementation process of the MNP technique based on data services in prior art. If a data service sender and a data service receiver are served by two different mobile operators and the receiver is a MNP subscriber, then a data service transmission process is as follows:
S1: When receiving a data message sent by the sender, a service system of the sender searches a database according to a mobile subscriber number of the receiver to determine whether the receiver is a subscriber of the same service system; if yes, the data message is directly sent to the receiver, otherwise a "data service route search message" is initiated according to mobile subscriber number information of the receiver. In other words, if the service system of the sender determines that the receiver is a GSM subscriber, it constructs and initiates a GSM data service route search message which is MAP-SEND-ROUTING-INFO-FOR-SM, a subscriber number parameter in the MAP-SEND-ROUTING-INFO-FOR-SM is MSISDN, and a Signal Connection Control Protocol (SCCP) layer destination address is an MSISDN-based Global Title (GT) number. Similarly, if the service system of the sender determines that the receiver is a CDMA subscriber, it constructs and initiates a CDMA data service route search message which is SMSREQ, a subscriber number parameter in the SMSREQ is MDN, and an SCCP layer destination address is a MDN-based GT number. If the service system of the sender is unable to determine the type of the receiver, it may choose one of the above two modes to try searching, and if one fails, try the other one.
S2: The service system of the sender sends the data service route search message to a Signaling Transfer Point MNP-STP which is connected with the service system of the sender and supports MNP.
S3: When receiving an SCCP message carrying the data service route search message, the MNP-STP searches an MNP database according to the GT number based on subscriber number in the SCCP layer destination address. Because basic information stored in the MNP database is a table mapping mobile subscriber numbers and new HLR addresses after implementing MNP, and a new HLR address is usually a GT number of a new HLR, an SS7 address of a new HLR HLR-B (i.e., the GT number of the HLR-B) after implementing MNP may be obtained for the mobile subscriber number of the receiver. The MNP-STP replaces the SCCP layer destination address in the received message with the SS7 address of the new HLR-B, and then reroutes the route search message after address replacement to the new HLR-B through the No.7 signaling network.
S4: When receiving the data service route search message, the HLR-B searches an internal database according to the subscriber number carried in the message to obtain the corresponding mobile subscriber identification which is International Mobile Subscriber Identification (IMSI) in GSM network or Mobile Identification Number (MIN) in CDMA network, incorporates the obtained mobile subscriber identification into a response message to the received data service route search message and returns the response message to the service system of the sender;
S5: When receiving the response message returned by the HLR-B, the service system of the sender searches a database according to the mobile subscriber identification of the receiver to obtain the mobile operator for the receiver, and determines the address of the service system of the receiver accordingly, and forwards the data message to the service system of the receiver.

However, in the above implementation process of the MNP technique based on data services in prior art, if the receiver is unavailable for the communication, e.g., the receiver has turned off the terminal, is out of the service area, or has entered into a shielded area, etc., an error code rather than the mobile subscriber identification (e.g. IMSI) is contained in the response message returned from HLR-B; in other words, the service system of the sender will be unable to obtain the mobile subscriber identification, e.g. IMSI, of the receiver correctly, and accordingly unable to determine the address information of the receiver's service system based, e.g. Multimedia Messaging Service aystem, on the mobile subscriber identification of the receiver, and then the forwarding of the data message will be delayed or even fail.

### Summary of the Invention

The present invention provides a method for implementing MNP based on data services, by which an address of a service system of a receiver can be determined accurately and then data message forwarding can be performed even when the receiver is unable to communicate normally, thereby avoid delayed or even failed data message forwarding.

A method for implementing MNP based on data services provided in the present invention includes:
determining, by a Signaling Transfer Point supporting MNP (MNP-STP), a home location register (HLR) for a receiver after implementing MNP;
determining, by a service system of a sender, an address of a service system of the receiver through searching a route table according to a GT number of the HLR carried in a response message from the HLR;
forwarding, by the service system of the sender, a data message targeting to the receiver to the service system of the receiver based on the address of the service system of the receiver determined.

The process of determining a home location register for a receiver after implementing MNP includes:
forwarding a route search message to a signaling transfer point that supports MNP, wherein a destination address in the route search message is a GT number of a mobile subscriber number of the receiver;
searching, by the signaling transfer point, an MNP database according to the GT number of the mobile subscriber number of the receiving mobile subscriber carried in the route search message
received, to determine the HLR for the receiver after implementing MNP.

Before forwarding the route search message to the signaling transfer point:
a sender sends the data message to a service system of the sender;
if the service system of the sender determines that the receiver is a subscriber of the same service system according to the mobile subscriber number of the receiver, it sends the data message directly to the receiver.

The method further includes the following processes between the process of determining a home location register for a receiver after implementing MNP and the process of determining an address of a service system of the receiver:
forwarding, by the signaling transfer point, the route search message to the HLR determined;
returning, by the HLR, a response message to the service system of the sender, with a GT number of the HLR being carried in an SCCP layer source address in the response message, when the HLR receives the route search message.

The method further includes the following processes between the process of determining a home location register for a receiver after implementing MNP and the process of determining an address of a service system of the receiver:
forwarding, by the signaling transfer point, the route search message to the HLR determined;
searching, by the HLR, a subscriber information database according to the mobile subscriber number of the receiver carried in the route search message received to obtain the mobile subscriber identification of the receiver;
returning, by the HLR, a response message carrying the mobile subscriber identification of the receiver, with the signal source address in the response message being the GT number of the HLR, to the service system of the sender.

The method further includes the following processes between the process of determining a home location register for a receiver after implementing MNP and the process of determining an address of a service system of the receiver:
forwarding, by the signaling transfer point, the route search message to the HLR determined;
returning, by the HLR, a response message to a service system of the sender, with a GT number of the HLR being carried in an SCCP layer source address, if the HLR can not find a mobile subscriber identification information of the receiver in the subscriber information database.

The method further includes the following processes between the process of determining a home location register for a receiver after implementing MNP and the process of determining an address of a service system of the receiver:
forwarding, by the signaling transfer point, the route search message to the HLR determined;
carrying, by the HLR, a mobile subscriber identification of the receiver in a response message and returning the response message to a service system of a sender, when the HLR obtains the mobile subscriber identification information of the receiver from a the subscriber information database;
determining, by the service system of the sender, the address of the service system of the receiver according to the mobile subscriber identification of the receiver carried in the response message received.

The response message returned by the HLR is a user abort message, which carries an error parameter identifying that the receiver of the data message is inaccessible.

The process of determining an address of a service system of the receiver further includes: determining whether the receiver is an authorized subscriber according to the error parameter identifying the receiver is inaccessible.

The response message returned by the HLR carries a serial number of the receiver.

The service system of the sender determines whether the receiver is an authorized subscriber according to the serial number.

The process of determining an address of a service system of the receiver includes:
determining a mobile network ID for the receiver according to the GT number of the HLR carried in the response message from the HLR; and
searching a route table according to the mobile network ID for the receiver to determine the address of the service system of the receiver.

It is a common and frequent situation for a subscriber terminal to be powered off or enter a shielded area. In such a case, the mobile data interconnect service can not be routed normally, and the probability of abnormal routing is high, possibly over 50% at night. Therefore, the data message can not be routed to the service system of the receiver correctly, resulting in the problem of data message forwarding delay or even fail. The method of implementing MNP based on data service according to the embodiment of the present invention proposes that when the service system of the sender can not obtain the mobile subscriber identification (IMSI or MIN) of the receiver returned from the current HLR for the receiver after implementing MNP because the data message receiver can not communicate normally, e.g., the receiver terminal is powered off or enters a shielded area, and thus the address of the service system of the receiver can not be determined, the service system of the sender will determine the address of the service system of the receiver according to the GT number of the HLR carried in the SCCP layer source address in the response message returned from the current HLR for the receiver after implementing MNP, and forward the data message targeting to the receiver to the service system of the receiver. In this way, the influence on mobile data interconnect service in cases that the receiver can not communicate normally due to the terminal being powered off or entering a shielded area, and thereby the method according to the present invention effectively improves success ratio of mobile data service system interconnect service, so that the route to the service system of the receiver can be determined without waiting for the receiver terminal to be powered on or enter into a normally covered area. Therefore, the method improves the efficiency of mobile data service interconnecting without increasing time delay.

### Brief Descriptions of the Drawings

Figure 1 is a simplified schematic diagram of the implementation process of the MNP technique in prior art;
Figure 2 is a flow diagram of a basic implementation according to the present invention;
Figure 3 is a flow diagram of a specific implementation process according to the present invention;
Figure 4 is a schematic diagram of a process according to an embodiment of the present invention applied in GSM network.

### Detailed Descriptions of the Invention

A method for implementing MNP based on data services according to the present invention proposes to utilize a GT number of a current HLR for a receiver to determine address information of a service system of the receiver, the GT number is carried in an SCCP layer source address in a response message returned from the HLR. Then, a data message is forwarded to the service system of the receiver, so as to make the process of determining the address information of the service system of the receiver independent from the state of the receiver. Thus, success ratio of data service forwarding is improved.

To make the principle, and features of the present invention more clear, the embodiments of the present invention for implementing MNP based on data services will be described in detail with reference to the accompanying drawings.

Figure 2 shows a flow diagram of an implementation according to the present invention. The specific implementation process is as follows:
Block S10: a current home location register (HLR) for a data message receiver after implementing MNP is determined;
Block S11: a service system of a data message sender determines an address of a service system of the receiver according to a GT number of the HLR carried in a signal connection control protocol (SCCP) layer source address in a response message sent by the HLR determined;
Block S12: the service system of the sender forwards a data message targeting to the receiver to the service system of the receiver according to the address determined.

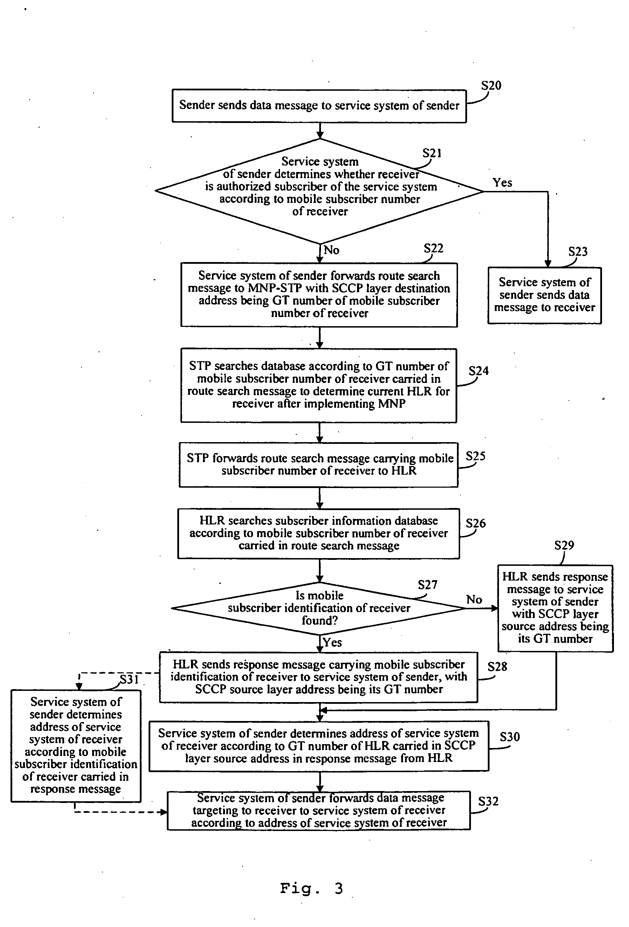

Figure 3 is a flow diagram showing a specific implementation process according to the present invention. The process is as follows:
Block S20: the sender sends a data message to the service system of the sender;
Block S21: the service system of the sender searches its subscriber information database according to a mobile subscriber number of the receiver carried in the data message to determine whether the receiver is a subscriber of the same service system; if yes, the process turns to block S23; otherwise the process turns to block S22;
Block S22: the service system of the sender forwards a data service route search message to a signal transfer point connected with the service system of the sender and supporting MNP (MNP-STP), with an SCCP layer destination address in the data service route search message being a global Title (GT) number of the mobile subscriber number of the receiver, and then the process proceeds to block S24;
Block S23: the service system of the sender sends the data message to the receiver according to the mobile subscriber number of the receiver;
Block S24: the MNP-STP searches a MNP database according to the GT number to determine a current HLR for the receiver after implementing MNP;
Block S25: the MNP-STP forwards the data service route search message carrying the mobile subscriber number of the receiver to the HLR determined;
Block S26: the HLR searches its subscriber information database according to the mobile subscriber number of the receiver carried in the data service route search message received;
Block S27: the HLR determines whether a mobile subscriber identification of the receiver can be found; if yes, the process turns to block S28; otherwise, the process turns to block S29;
Block S28: the HLR returns a response message carrying the mobile subscriber identification of the receiver to the service system of the sender, with an SCCP layer source address in the response message being a GT number of the HLR, and then the process turns to block S30 or block S31;
Block S29: the HLR sends a response message to the service system of the sender, with an SCCP layer source address in the response message being a GT number of the HLR.

In GSM system, the HLR returns the response message which is a success response message in normal conditions or a User Abort response message if the receiver can not be reached, e.g., in cases of the terminal being powered off or out of the service area. The User Abort response message carries an error parameter (User Error) indicating that the data message receiver is inaccessible, i.e., the User Error parameter carries an AbsentSubscriber_SM value identifying that the data message receiver is inaccessible.

In CDMA mobile communication system, the response message returned from the HLR carries an Electric Serial Number (ESN) of the receiver;

Block S30: the service system of the data message sender determines an address of the service system of the data message receiver according to the GT number of the HLR, the GT number of the HLR is carried in the SCCP layer source address in the response message sent from the HLR. Then, the process turns to block S32.

This block further includes: in GSM system, the service system of the sender determines whether the receiver is an authorized subscriber according to the error parameter AbsentSubscriber_SM carried in the User Abort response message received identifying that the data message receiver is inaccessible; or

In CDMA system, the service system of the sender determines whether the receiver is an authorized subscriber according to the ESN of the receiver carried in the response message received;

Block S31: the service system of the data message sender determines the address of the service system of the data message receiver according to the mobile subscriber identification of the receiver carried in the response message sent from the HLR;

Block S32: the service system of the sender forwards the data message targeting to the receiver to the service system of the receiver according to the address of the service system of the receiver determined. The specific implementation process of this block includes the following sub-blocks:
Firstly, the service system of the sender determines a mobile network ID for the receiver according to the GT number of the HLR carried in the SCCP layer source address in the response message sent from the HLR;
Next, the service system of the sender searches a route table according to the mobile network ID for the receiver to determine the address of the service system of the receiver.

In the technical solution in prior art, the IMSI or MIN of the receiver is utilized to determine routing information of the service system of the receiver. In contrast, in the technical solution of the present invention, the ID of the current mobile network for the receiver is determined utilizing the GT number of the HLR carried in the SCCP layer source address in the response message returned from the current HLR for the receiver after implementing MNP, the response message may or may not carry the IMSI or MIN of the receiver. Thereby, the routing information of the service system of the receiver is determined. Furthermore, if the terminal of the receiver is powered on, the service system of the sender can utilize the IMSI or MIN of the receiver or the GT number of the current HLR for the receiver to determine the route to the service system of the receiver. However, if the terminal of the receiver is powered off, the service system of the sender can only utilize the GT number of the current HLR for the receiver to determine the route to the service system of the receiver.

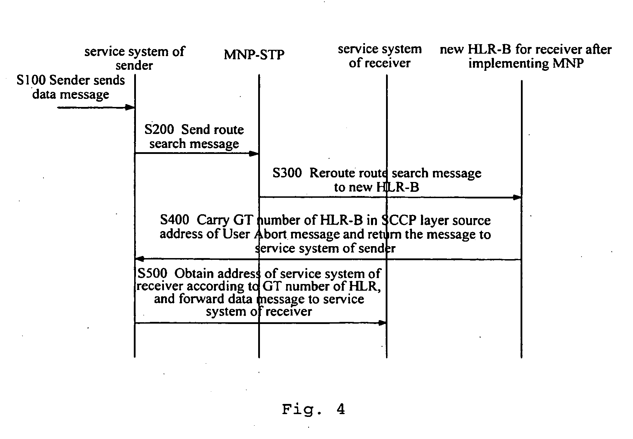

Figure 4 is a schematic diagram showing a process according to an embodiment of the present invention applied in GSM network, the specific implementation process is as follows:
Block S100: when receiving a data message sent by a sender, a service system of the sender searches its subscriber information database according to a mobile subscriber number MSISDN of a receiver to determine whether the receiver is a subscriber of the same service system. If yes, the service system of the sender sends the data message to the receiver directly; otherwise, the service system of the sender initiates a "data service route search message", i.e., constructs and initiates a GSM data service route search message MAP-SEND-ROUTING-INFO-FOR-SM according to a mobile subscriber number of the receiver, with a subscriber number parameter in the MAP-SEND-ROUTING-INFO-FOR-SM being MSISDN and an SCCP layer destination address being an MSISDN-based GT number;
Block S200: the service system of the sender sends the data service route search message MAP-SEND-ROUTING-INFO-FOR-SM to a signal transfer point (MNP-STP) connected with the service system of the sender and supporting MNP;
Block S300: when receiving an SCCP message carrying the data service route search message, the MNP-STP searches an external or internal MNP database according to the MSISDN-based GT number in the SCCP layer destination address, the external MNP database usually provides services to multiple nodes in a network, but search efficiency and reliability is low. To improve search efficiency and reliability, an internal MNP database synchronized to an external MNP database is provided. Because basic information stored in the MNP database is a table mapping MSISDN numbers to new HLR addresses after implementing MNP, and a new HLR address is usually a GT number of an HLR, an SS7 address (i.e., GT number) of a new HLR HLR-B for the receiver after implementing MNP may be obtained. The MNP-STP replaces the GT number of the MSISDN of the receiver carried in the SCCP layer destination address in the route search message received with the SS7 address of the new HLR-B obtained, and then reroutes the route search message after address replacement to the new HLR-B through a No.7 signaling network;
Block S400: when receiving the data service route search message, the HLR-B searches its subscriber information database according to the MSISDN of the receiver carried in the data service route search message to obtain the corresponding mobile subscriber identification IMSI (in the case of the prior art where the IMSI of the receiver can be obtained normally). If the HLR-B determines that the receiver is an authorized subscriber but can not obtain the IMSI of the receiver because the receiver's terminal is powered off or enters a shielded area, the HLR-B returns a User Abort response message to the service system of the sender. A value of a User Error parameter in the User Abort response message is AbsentSubscriber_SM identifying that the data message receiver is inaccessible. In addition, in the User Abort response message returned, the SCCP layer source address carries the GT number of the HLR-B;
Block S500: when receiving the User Abort response message returned from the HLR-B, the service system of the sender determines that the receiver is an authorized subscriber according to the User Error parameter value AbsentSubscriber_SM, and then determines a mobile network ID for the receiver according to the GT number of the HLR-B carried in the SCCP layer source address in the User Abort message (since the GT number of the HLR is bound to a network, the GT number contains Country Code and Network ID). The service system of the sender searches a route table according to the mobile network ID for the receiver to obtain address information of a service system of the receiver. The service system of the sender forwards the data message targeting to the receiver to the service system of the receiver according to the address information of the service system of the receiver.

The technical solution described above is also applicable to CDMA mobile communication networks. The service system of the sender determines a mobile network ID for the receiver according to a GT number of a new HLR HLR-B for the receiver after implementing MNP, the GT number of the HLR-B is carried in an SCCP layer source address in a response message SMSREQ returned from the HLR-B. The service system of the sender looks up a route table according to the mobile network ID for the receiver to obtain address information of the service system of the receiver. In addition, the technical idea is also applicable to systems in which SMSREQ message does not support carrying MIN, i.e., it is unnecessary to upgrade HLR to support IS841 protocol.

While the present invention has been illustrated and described with reference to some preferred embodiments, the present invention is by no means limited thereto. Those skilled in the art should recognize that various changes and modifications are available without departing from the scope of the present invention as defined by the accompanying claims. Therefore, the scope of the present invention is only defined by the accompanying claims.

## Claims

1. A method for implementing mobile number portability based on data services, **characterized by** comprising:
determining (S10), by a Signaling Transfer Point supporting Mobile Number Portability, MNP-STP, a home location register for a receiver after implementing mobile number portability;
determining (S11), by a service system of a sender, an address of a service system of the receiver through searching a route table according to a global title number of the home location register carried in a response message sent from the home location register;
forwarding (S12), by the service system of the sender, a data message targeting to the receiver to the service system of the receiver according to the address of the service system of the receiver determined.

2. The method according to claim 1, wherein the process of determining (S10) a home location register for a receiver after implementing mobile number portability comprises:
forwarding (S22) a route search message to a signaling transfer point supporting mobile number portability, wherein a destination address in the route search message is a global title number of a mobile subscriber number of the receiver;
searching (S24), by the signaling transfer point, a mobile number portability database according to the global title number of the mobile subscriber number of the receiver carried in the route search message received to determine the home location register for the receiver after implementing mobile number portability.

3. The method according to claim 2, further comprising:
sending (S20), by a sender, the data message to a service system of the sender;
sending (S23), by the service system of the sender, the data message to the receiver if the service system of the sender determines (S21) that the receiver is a subscriber of the service system according to the mobile subscriber number of the receiver.

4. The method according to claim 2, wherein the method further comprises the following processes between the process of determining a home location register for a receiver after implementing mobile number portability and the process of determining an address of a service system of the receiver:
forwarding (S25), by the signaling transfer point, the route search message to the home location register determined;
returning (S29), by the home location register, a response message to a service system of the sender, with a global title number of the home location register being carried in a signal connection control protocol layer source address in the response message, when the home location register receives the route search message.

5. The method according to claim 2, wherein the method further comprises the following processes between the process of determining a home location register for a receiver after implementing mobile number portability and the process of determining an address of a service system of the receiver:
forwarding (S25), by the signaling transfer point, the route search message to the home location register determined;
searching (S27), by the home location register, a subscriber information database according to the mobile subscriber number of the receiver carried in the route search message received to obtain a mobile subscriber identification of the receiver;
returning (S28), by the home location register, a response message carrying the mobile subscriber identification of the receiver to a service system of a sender, with a signal connection control protocol layer source address in the response message being a global title number of the home location register.

6. The method according to claim 2, wherein the method further comprises the following processes between the process of determining a home location register for a receiver after implementing mobile number portability and the process of determining an address of a service system of the receiver:
forwarding (S25), by the signaling transfer point, the route search message to the home location register determined;
returning (S29) a response message to a service system of the sender, with a global title number of the home location register being carried in a signal connection control protocol layer source address in the response message, if the home location register can not find a mobile subscriber identification of the receiver in a subscriber information database.

7. The method according to claim 2, wherein the method further comprises the following processes between the process of determining a home location register for a receiver after implementing mobile number portability and the process of determining an address of a service system of the receiver:
forwarding (S25), by the signaling transfer point, the route search message to the home location register determined;
carrying (S28), by the home location register, a mobile subscriber identification of the receiver in a response message and returning the response message to a service system of a sender, when the home location register obtains the mobile subscriber identification of the receiver from a subscriber information database;
determining (S31), by the service system of the sender, the address of the service system of the receiver according to the mobile subscriber identification of the receiver carried in the response message received.

8. The method according to claim 4 or 6, wherein the response message returned from the home location register is a user abort message, the user abort message carrying an error parameter identifying that the receiver of the data message is inaccessible.

9. The method according to claim 8, wherein the process of determining an address of a service system of the receiver further comprises: determining whether the receiver is an authorized subscriber according to the error parameter identifying that the receiver is inaccessible.

10. The method according to claim 4 or 6, wherein the response message returned from the home location register carries a serial number of the receiver, and
the service system of the sender determines whether the receiver is an authorized subscriber according to the serial number.

11. The method according to claim 1, wherein the process of determining an address of a service system of the receiver comprises:
determining a mobile network ID for the receiver according to the global title number of the home location register carried in the response message from the home location register; and
searching a route table according to the mobile network ID for the receiver to determine the address of the service system of the receiver.

## Patentansprüche

1. Verfahren zum Implementieren einer Rufnummernmitnahme im Mobilfunk (Mobile Number Portability) auf der Basis von Datendiensten, **dadurch gekennzeichnet, dass** es folgendes umfasst:
durch einen die Rufnummernmitnahme im Mobilfunk unterstützenden Signalisierungs-Transfer-Punkt, MNP-STP, Bestimmen (S10) eines Heimatregisters (Home Location Register) für einen Empfänger nach dem Implementieren der Rufnummernmitnahme im Mobilfunk;
durch ein Dienst-System eines Senders Bestimmen (S11) einer Adresse eines Dienst-Systems des Empfängers durch Suchen in einer Routen-Tabelle entsprechend einer globalen Titel-Nummer (Global Title Number) des Heimatregisters, die in einer Antwort-Nachricht übertragen wird, die vom Heimatregister gesendet wird;
durch das Dienst-System des Senders Weiterleiten (S12) einer Daten-Nachricht, die auf den Empfänger zielt, an das Dienst-System des Empfängers entsprechend der Adresse des Dienst-Systems des bestimmten Empfängers.

2. Verfahren gemäß Anspruch 1, wobei der Prozess des Bestimmens (S10) eines Heimatregisters für einen Empfänger nach dem Implementieren einer Rufnummernmitnahme im Mobilfunk umfasst:
Weiterleiten (S22) einer Routen-Such-Nachricht an einen Signalisierungs-Transfer-Punkt, der die Rufnummernmitnahme im Mobilfunk unterstützt, wobei eine Zieladresse in der Routen-Such-Nachricht eine globale Titel-Nummer einer Mobilfunknummer des Empfängers ist;
durch den Signalisierungs-Transfer-Punkt Suchen (S24) einer Datenbank der Rufnummernmitnahme im Mobilfunk entsprechend der globalen Titel-Nummer der Mobilfunknummer des Empfängers, die in der Routen-Such-Nachricht übertragen wird, die empfangen wurde, um das Heimatregister für den Empfänger nach dem Implementieren der Rufnummernmitnahme im Mobilfunk zu bestimmen.

3. Verfahren gemäß Anspruch 2, ferner umfassend:
durch einen Sender Senden (S20) der Daten-Nachricht an ein Dienst-System des Senders;
durch das Dienst-System des Senders Senden (S23) der Daten-Nachricht an den Empfänger, wenn das Dienst-System des Senders bestimmt (S21), dass der Empfänger gemäß der Mobilfunknummer des Empfängers ein Teilnehmer des Dienst-Systems ist.

4. Verfahren gemäß Anspruch 2, wobei das Verfahren ferner die folgenden Prozesse zwischen dem Prozess der Bestimmung eines Heimatregisters für einen Empfänger nach dem Implementieren einer Rufnummernmitnahme im Mobilfunk und dem Prozess des Bestimmens einer Adresse eines Dienst-Systems des Empfängers umfasst:
durch den Signalisierungs-Transfer-Punkt Weiterleiten (S25) der Routen-Such-Nachricht an das bestimmte Heimatregister;
durch das Heimatregister Zurücksenden (S29) einer Antwort-Nachricht an das Dienst-System des Senders, wobei eine globale Titel-Nummer des Heimatregisters in einer Quell-Adresse einer Schicht eines Signalverbindungs-Steuerungs-Protokolls (Signal Connection Control Protocol) übertragen wird, wenn das Heimatregister die Routen-Such-Nachricht empfängt.

5. Verfahren gemäß Anspruch 2, wobei das Verfahren ferner die folgenden Prozesse zwischen dem Prozess der Bestimmung eines Heimatregisters für einen Empfänger nach dem Implementieren einer Rufnummernmitnahme im Mobilfunk und dem Prozess des Bestimmens einer Adresse eines Dienst-Systems des Empfängers umfasst:
durch den Signalisierungs-Transfer-Punkt Weiterleiten (S25) der Routen-Such-Nachricht an das bestimmte Heimatregister;
durch das Heimatregister Suchen (S27) einer Teilnehmer-Informations-Datenbank entsprechend der Mobilfunknummer des Empfängers, die in der Routen-Such-Nachricht übertragen wird, die empfangen wird, um eine Mobilfunk-Teilnehmer-Kennung des Empfängers zu erhalten;
durch das Heimatregister Zurücksenden (S28) einer Antwort-Nachricht, die die Mobilfunk-Teilnehmer-Kennung des Empfängers überträgt, an ein Dienst-System eines Senders, wobei eine Quell-Adresse einer Schicht eines Signalverbindungs-Steuerungs-Protokolls in der Antwort-Nachricht eine globale Titel-Nummer des Heimatregisters ist.

6. Verfahren gemäß Anspruch 2, wobei das Verfahren ferner die folgenden Prozesse zwischen dem Prozess der Bestimmung eines Heimatregisters für einen Empfänger nach dem Implementieren einer Rufnummernmitnahme im Mobilfunk und dem Prozess des Bestimmens einer Adresse eines Dienst-Systems des Empfängers umfasst:
durch den Signalisierungs-Transfer-Punkt Weiterleiten (S25) der Routen-Such-Nachricht an das bestimmte Heimatregister;
durch das Heimatregister Zurücksenden (S29) einer Antwort-Nachricht an ein Dienst-System des Senders, wobei eine globale Titel-Nummer des Heimatregisters in einer Quell-Adresse einer Schicht eines Signalverbindungs-Steuerungs-Protokolls in der Antwort-Nachricht übertragen wird, wenn das Heimatregister in einer Teilnehmer-Informations-Datenbank keine Mobilfunk-Teilnehmer-Kennung des Empfängers finden kann.

7. Verfahren gemäß Anspruch 2, wobei das Verfahren ferner die folgenden Prozesse zwischen dem Prozess der Bestimmung eines Heimatregisters für einen Empfänger nach dem Implementieren einer Rufnummernmitnahme im Mobilfunk und dem Prozess des Bestimmens einer Adresse eines Dienst-Systems des Empfängers umfasst:
durch den Signalisierungs-Transfer-Punkt Weiterleiten (S25) der Routen-Such-Nachricht an das bestimmte Heimatregister;
durch das Heimatregister Übertragen (S28) einer Mobilfunk-Teilnehmer-Kennung des Empfängers in einer Antwort-Nachricht und Zurücksenden der Antwort-Nachricht an ein Dienst-System eines Senders, wenn das Heimatregister von einer Teilnehmer-Informations-Datenbank die Mobilfunk-Teilnehmer-Kennung des Empfängers erhält;
durch das Dienst-System des Senders Bestimmen (S31) der Adresse des Dienst-Systems des Empfängers entsprechend der Mobilfunk-Teilnehmer-Kennung des Empfängers, die in der empfangenen Antwort-Nachricht übertragen wird.

8. Verfahren gemäß Anspruch 4 oder 6, wobei die vom Heimatregister zurückgesendete Antwort-Nachricht eine Benutzer-Abbruch-Meldung ist, wobei die Benutzer-Abbruch-Meldung einen Fehler-Parameter überträgt, der kennzeichnet, dass der Empfänger der Datennachricht nicht erreichbar ist.

9. Verfahren gemäß Anspruch 8, wobei der Prozess des Bestimmens einer Adresse eines Dienst-Systems des Empfängers ferner umfasst: Entsprechend dem Fehler-Parameter, der kennzeichnet, dass der Empfänger nicht erreichbar ist, Bestimmen, ob der Empfänger ein autorisierter Teilnehmer ist.

10. Verfahren gemäß Anspruch 4 oder 6, wobei die vom Heimatregister zurückgesendete Antwort-Nachricht eine Seriennummer des Empfängers überträgt, und
das Dienst-System des Senders entsprechend der Seriennummer bestimmt, ob der Empfänger ein autorisierter Teilnehmer ist.

11. Verfahren gemäß Anspruch 1, wobei der Prozess des Bestimmens einer Adresse eines Dienst-Systems des Empfängers umfasst:
Bestimmen einer Mobilfunknetz-ID für den Empfänger entsprechend der globalen Titel-Nummer des Heimatregisters, die in der Antwort-Nachricht vom Heimatregister übertragen wird; und
Suchen in einer Routen-Tabelle entsprechend der Mobilfunknetz-ID für den Empfänger, um die Adresse des Dienst-Systems des Empfängers zu bestimmen.

## Revendications

1. Méthode pour mettre en oeuvre la portabilité du numéro de téléphonie mobile sur la base des services de données, **caractérisée en ce qu'**elle comprend :
déterminer (S10), via un point de transfert sémaphore supportant la portabilité du numéro de téléphonie mobile, MNP-STP, un registre de localisation nominal pour un destinataire après la mise en oeuvre de la portabilité du numéro de téléphonie mobile ;
déterminer (S11) , via un réseau de service dépendant de l'envoyeur, une adresse d'un réseau de service dépendant du destinataire via la recherche d'une table de routage sur la base d'un numéro de titre global du registre de localisation nominal transporté dans un message de réponse envoyé depuis le registre de localisation nominal ;
réacheminer (S12) , via le réseau de service dépendant de l'envoyeur, un message de données ciblé sur le destinataire, sur le réseau de service dépendant du destinataire sur la base de l'adresse du réseau de service dépendant du destinataire déterminé.

2. Méthode selon la revendication 1, dans laquelle le processus de détermination (S10) d'un registre de localisation nominal pour un destinataire après la mise en oeuvre de la portabilité du numéro de téléphonie mobile comprend :
réacheminer (S22) un message de recherche de route vers un point de transfert sémaphore supportant la portabilité du numéro de téléphonie mobile, dans laquelle une adresse de destination dans le message de recherche de route est un numéro de titre global d'un numéro d'abonné à la téléphonie mobile du destinataire ;
chercher (S24), par le point de transfert sémaphore, une base de données de portabilité du numéro de téléphonie mobile sur la base du numéro de titre global du numéro d'abonné à la téléphonie mobile du destinataire, transporté dans le message de recherche de route reçu, pour déterminer le registre de localisation nominal pour le destinataire après la mise en oeuvre de la portabilité du numéro de téléphonie mobile.

3. Méthode selon la revendication 2, comprenant en outre :
envoyer (S20), via un envoyeur, le message de données à un réseau de service dépendant de l'envoyeur ;
envoyer (S23) au destinataire, via le réseau de service dépendant de l'envoyeur, le message de données si le réseau de service dépendant de l'envoyeur détermine (S21) que le destinataire est un abonné du réseau de service dépendant sur la base du numéro d'abonné à la téléphonie mobile du destinataire.

4. Méthode selon la revendication 2, dans laquelle la méthode comprend en outre les processus suivants entre le processus de détermination d'un registre de localisation nominal pour un destinataire après la mise en oeuvre de la portabilité du numéro de téléphonie mobile et le processus de détermination d'une adresse d'un réseau de service dépendant du destinataire :
réacheminer (S25) , via le point de transfert sémaphore, le message de recherche de route vers le registre de localisation nominal déterminé ;
retourner (S29) , par le registre de localisation nominal, un message de réponse vers un réseau de service dépendant de l'envoyeur, un numéro de titre global du registre de localisation nominal étant transporté dans une adresse source de couche de protocole de contrôle de connexions de signaux dans le message de réponse, lorsque le registre de localisation nominal reçoit le message de recherche de route.

5. Méthode selon la revendication 2, dans laquelle la méthode comprend en outre les processus suivants entre le processus de détermination d'un registre de localisation nominal pour un destinataire après la mise en oeuvre de la portabilité du numéro de téléphonie mobile et le processus de détermination d'une adresse d'un réseau de service dépendant du destinataire :
réacheminer (S25) , via le point de transfert sémaphore, le message de recherche de route vers le registre de localisation nominal déterminé ;
chercher (S27), par le registre de localisation nominal, une base de données d'informations d'abonnés sur la base du numéro d'abonné à la téléphonie mobile du destinataire, transporté par le message de recherche de route reçu, pour obtenir un numéro d'identification d'abonné à la téléphonie mobile du destinataire ;
retourner (S28) , par le registre de localisation nominal, un message de réponse transportant le numéro d'identification d'abonné à la téléphonie mobile du destinataire vers un réseau de service dépendant d'un envoyeur, une adresse source de couche de protocole de contrôle de connexions de signaux dans le message de réponse étant un numéro de titre global du registre de localisation nominal.

6. Méthode selon la revendication 2, dans laquelle la méthode comprend en outre les processus suivants entre le processus de détermination d'un registre de localisation nominal pour un destinataire après la mise en oeuvre de la portabilité du numéro de téléphonie mobile et le processus de détermination d'une adresse d'un réseau de service dépendant du destinataire :
réacheminer (S25), via le point de transfert sémaphore, le message de recherche de route vers le registre de localisation nominal déterminé ;
retourner (S29) un message de réponse vers un réseau de service dépendant de l'envoyeur, un numéro de titre global du registre de localisation nominal étant transporté dans une adresse source de couche de protocole de contrôle de connexions de signaux dans le message de réponse, si le registre de localisation nominal ne peut trouver un numéro d'identification d'abonné du destinataire dans une base de donnés d'informations d'abonnés.

7. Méthode selon la revendication 2, dans laquelle la méthode comprend en outre les processus suivants entre le processus de détermination d'un registre de localisation nominal pour un destinataire après la mise en oeuvre de la portabilité du numéro de téléphonie mobile et le processus de détermination d'une adresse d'un réseau de service dépendant du destinataire :
réacheminer (S25) , via le point de transfert sémaphore, le message de recherche de route vers le registre de localisation nominal déterminé ;
transporter (S28), par le registre de localisation nominal, un numéro d'identification d'abonné à la téléphonie mobile du destinataire dans un message de réponse, et retourner le message de réponse à un réseau de service dépendant d'un envoyeur, lorsque le registre de localisation nominal obtient le numéro d'identification d'abonné du destinataire à partir d'une base de données d'informations d'abonnés ;
déterminer (S31) , par le réseau de service dépendant de l'envoyeur, l'adresse du réseau de service dépendant du destinataire sur la base du numéro d'identification d'abonné du destinataire, transporté dans le message de réponse reçu.

8. Méthode selon l'une quelconque des revendications 4 ou 6, dans laquelle le message de réponse retourné depuis le registre de localisation nominal est un message d'annulation utilisateur, ledit message d'annulation utilisateur transportant un paramètre d'erreur identifiant que le destinataire du message de données est inaccessible.

9. Méthode selon la revendication 8, dans laquelle le processus de détermination d'une adresse d'un réseau de service dépendant du destinataire comprend en outre : déterminer si le destinataire est un abonné autorisé sur la base du paramètre d'erreur identifiant que le destinataire est inaccessible.

10. Méthode selon l'une quelconque des revendications 4 ou 6, dans laquelle le message de réponse retourné depuis le registre de localisation nominal transporte un numéro de série du destinataire, et le réseau de service dépendant de l'envoyeur détermine si le destinataire est un abonné autorisé sur la base du numéro de série.

11. Méthode selon la revendication 1, dans laquelle le processus de détermination d'une adresse d'un réseau de service dépendant du destinataire comprend :
déterminer un numéro d'identification de réseau mobile pour le destinataire sur la base du numéro de titre global du registre de localisation nominal, transporté dans le message de réponse depuis le registre de localisation nominal ; et
chercher une table de routage sur la base du numéro d'identification de réseau mobile pour le destinataire, pour déterminer l'adresse du réseau de service dépendant du destinataire.
